# EUROPÄISCHE PATENTANMELDUNG

(11) **EP 1 302 370 A2**
(43) Veröffentlichungstag der Anmeldung: **16.04.2003**
(21) Anmeldenummer: 02022818.5
(22) Anmeldetag: 12.10.2002
(51) Int. Cl.: B60R 13/02

(54) **Formhimmel für ein Kraftfahrzeug**

(30) Priorität: 16.10.2001 DE 10150451
(71) Anmelder: ArvinMeritor GmbH, 63128 Dietzenbach (DE)
(72) Erfinder: Algüera Gallego, José Manuel, Dipl.-Ing., 63739 Aschaffenburg (DE); Becker, Thomas, Dr.-Ing., deceased (DE); Reimer, Klaus, Dipl.-Ing., 38518 Gifhorn (DE); Scheuermann, Bernhard, Dipl.-Ing., 40699 Erkrath (DE)
(74) Vertreter: Oppermann, Ewald, Dipl.-Ing.

(57) **Zusammenfassung**

Formhimmel (1) als Teil der Innenraumausstattung eines Kraftfahrzeugs, bestehend aus einer dekorativen Oberflächenschicht und einer formsteifen Trägerschicht. In dem Formhimmel (1) sind Biegelinien (5), die auf unterschiedliche Weise erzeugt werden können, angebracht, welche am sonst biegesteifen Formhimmel (1) Zonen örtlicher Flexibilität generieren und auf diese Weise für die Montage des Formhimmels klappbare Teilbereiche (3, 4) des Formhimmels (1) bilden. Der Formhimmel (1) kann aufgrund dieser Maßnahmen durch vergleichsweise kleinere Karosserieöffnungen hindurch zu seiner Montage in den Innenraum des Kraftfahrzeugs verbracht werden.

## Beschreibung

Die Erfindung bezieht sich auf einen Formhimmel als Teil der Innenraumausstattung eines Kraftfahrzeugs, entsprechend dem Oberbegriff des Patentanspruchs 1.

Bei einem derartigen aus der DE 29 30 493 A1 bekannten, beispielsweise als Dachverkleidung ausgebildeten Einbauteil für die Innenauskleidung von Kraftfahrzeugen ist vorzugsweise eine von der Rückseite her entlang des Randes der Dachverkleidung verlaufende Nut mit im wesentlichen V-förmigem Querschnitt eingeformt, mit der eine definierte Biegelinie (dort "eindeutige Knickkante" genannt) für ein Umbiegeteil (dort "Umbug" genannt) vorgegeben ist. Dabei ist die Wandstärke des Verbundfertigteils am Grunde der Nut annähernd auf die Dicke der Oberflächenschicht reduziert, so daß sich beim Umbiegen eine scharfe Kante ergibt. Die scharfe Kante bildet den Rand des Fertigteils, d.h. bleibt nach dem Einbau des Fertigteils erhalten, wobei das zweischichtige Umbiegeteil zur Rückseite des Fertigteils hin umgebogen ist. Zur Erleichterung der Montage und zum Ausgleich von Fertigungstoleranzen soll das Umbiegeteil unter einem für den Einbau des Fertigteils günstigen Winkel elastisch nachgiebig angeformt sein.

Der Erfindung liegt die Aufgabe zugrunde, einen im wesentlichen biegesteifen Formhimmel so auszubilden, daß er durch eine Öffnung in den Innenraum des Fahrzeugs eingebracht werden kann, die selbst kleiner als die Außenmaße des Formhimmels im eingebauten Zustand ist.

Diese Aufgabe wird ausgehend von einem Formhimmel der eingangs angegebenen Ausbildung erfindungsgemäß durch die Merkmale des Anspruchs 1 gelöst. Vorteilhafte oder zweckmäßige Ausgestaltungen gehen aus den Unteransprüchen hervor und sind nachfolgend ebenfalls erläutert.

Nach dem Erfindungsgedanken wird der Formhimmel schon bei seiner Herstellung oder durch nachträgliche Bearbeitung mit Biegelinien versehen, an denen eine örtliche Schwächung der Widerstandsmomente gegen Verformung generiert wird, d.h. entlang dieser Linien wird die Flexibilität gegenüber den übrigen Teilbereichen des Formhimmels erhöht. Entlang dieser Linien können daher Teilbereiche des Formhimmels für die Einbringung des Formhimmels in den Innenraum des Kraftfahrzeugs geschwenkt werden. Bei der anschließenden Befestigung des Formhimmels unter dem Fahrzeugdach werden die geschwenkten Teilbereiche in die Positionen zurückgeschwenkt, die sie bei fertig montiertem Formhimmel als sichtbare Teile desselben einnehmen sollen.

Wie im Anspruch 2 angegeben ist, können Biegelinien auf unterschiedliche Weise am Formhimmel angebracht sein, um an unterschiedlichen Orten des Formhimmels an- oder einklappbare Teilbereiche des Formhimmels zu bilden. Hierbei können mehrere Teilbereiche des Formhimmels gleichzeitig an- oder einklappbar sein, beispielsweise können an allen vier Seiten um den zentralen Bereich des Formhimmels umlaufend derartige gleichzeitig um ihre Biegelinien zu schwenkende Teilbereiche des Formhimmels vorgesehen sein, insbesondere wenn karosserieseitig eine geschlossene Dachrahmenkonstruktion, bestehend aus einem vorderen, einem hinteren und zwei seitlichen Dachrahmenteilen, vorliegt, deren Öffnungsmaße in x- und y-Richtung kleiner als die Längen- und Breitenmaße des Formhimmels im eingebauten Zustand sind.

Die Strukturen, welche die Biegelinien bilden, können als Gestaltungselemente des Formhimmels wie im Anspruch 3 angegeben bewußt sichtbar, aber auch wie im Anspruch 4 angegeben unsichtbar vorgesehen sein.

In den Ansprüchen 5 bis 7 sind bevorzugte Ausgestaltungen unsichtbarer Biegelinienstrukturen angegeben, während die Ansprüche 8 und 9 bevorzugte Ausgestaltungen sichtbarer Biegelinienstrukturen beinhalten.

Durch die im Anspruch 10 aufgeführten Maßnahmen sollen Biegelinienstrukturen erzielt werden, die beim temporären An- oder Einklappen der betreffenden Teilbereiche des Formhimmels im Unterschied zum eingangs aufgeführten Stand der Technik keine scharfen Knickkanten ausbilden.

Weitere Einzelheiten der Erfindung werden nachfolgend anhand der Ausführungsbeispiele schematisch darstellenden Zeichnungen näher erläutert. Darin zeigt:
- Fig. 1: eine Perspektivansicht eines Ausführungsbeispiels des Formhimmels vor dem Einbau in ein Kraftfahrzeug,
- Fig. 2: eine Perspektivansicht des Formhimmels gemäß Fig. 1 mit zum Einbau in das Kraftfahrzeug verschwenkten Teilbereichen des Formhimmels,
- Fig. 3: eine der Figur 1 ähnliche Perspektivansicht in einem weiteren Beispiel des Formhimmels,
- Figuren 4 bis 10: abgebrochene Schnittdarstellungen durch den Formhimmel mit unterschiedlich ausgebildeten Biegelinien und
- Fig. 11: einen abgebrochenen Schnitt durch ein als Schiebedach ausgebildetes Kraftfahrzeugdach mit montiertem Formhimmel, dessen Biegelinie etwa der in Fig. 9 gezeigten Variante entspricht.

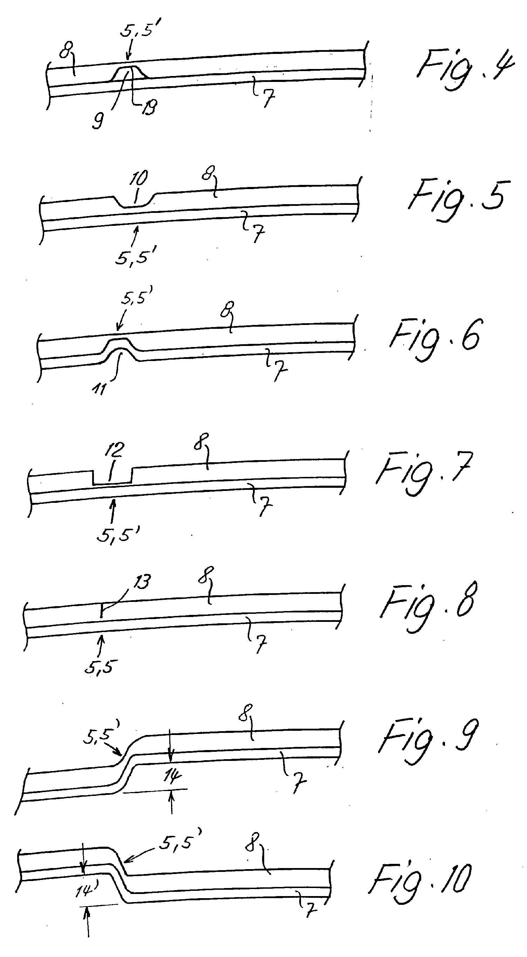

In den Figuren 4 bis 11 sind zur Vereinfachung die geschnittenen Flächen ohne Schraffuren dargestellt.

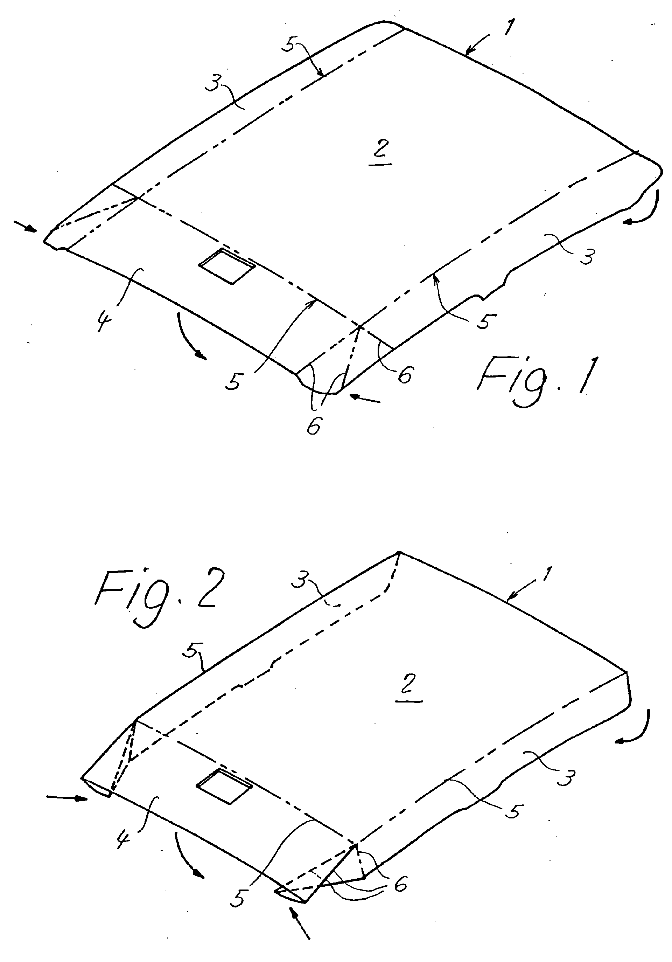

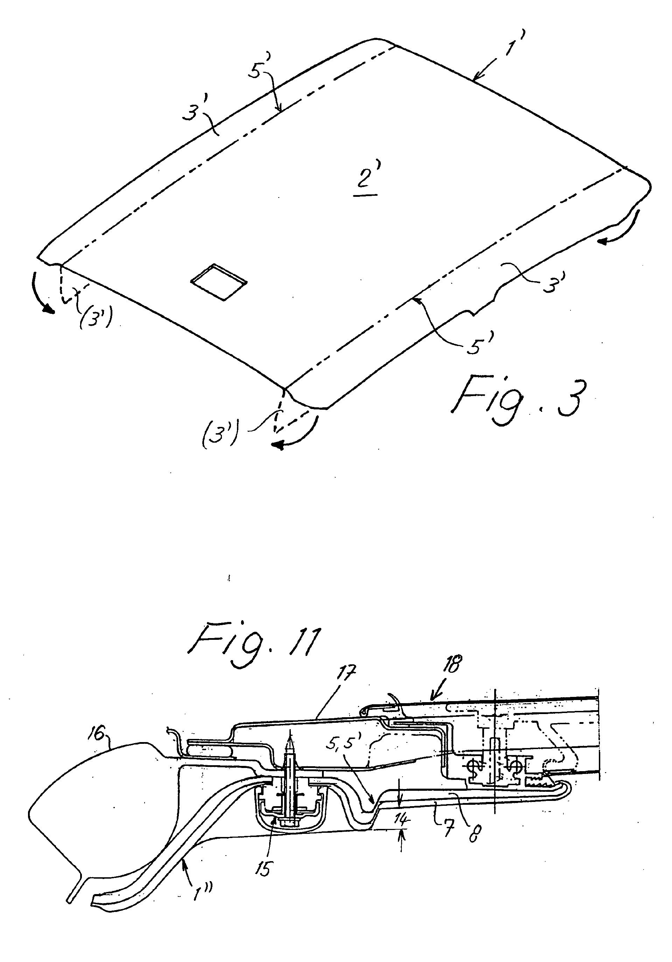

Der aus den Figuren 1 und 2 ersichtliche Formhimmel 1 besitzt einen zentralen biegesteifen Bereich 2, zwei klappbare seitliche Teilbereiche 3 und einen klappbaren vorderen Teilbereich 4. Die Teilbereiche 3 und 4 sind in sich ebenfalls biegesteif und sind durch Anbringen von durch unterbrochene Linien angedeutete Biegelinien 5 am Formhimmel 1 gebildet. An den beiden vorderen Eckbereichen des Formhimmels 1 befinden sich ebenfalls Biegelinien 6, welche beim An- oder Einklappen der Teilbereiche 3 und 4 in Richtung der in den Figuren 1 und 2 angegebenen Pfeile die in Fig. 2 angedeutete Faltenbildung ermöglichen.

Das Ausführungsbeispiel gemäß Fig. 3 zeigt einen Formhimmel 1', der sich von dem Formhimmel l gemäß den Figuren 1 und 2 nur dadurch unterscheidet, daß an seinem zentralen Bereich 2' nur zwei seitliche Teilbereiche 3' über Biegelinien 5' angeschlossen sind, nicht aber ein vorderer Teilbereich und damit auch keine faltbaren Eckbereiche. Pfeile deuten auch hier die Klapprichtungen an.

Wie aus den Figuren 4 bis 11 jeweils hervorgeht, besteht der Formhimmel aus einer dekorativen Oberflächenschicht 7, die nach dem Einbau in ein Kraftfahrzeug dem Innenraum desselben zugekehrt ist, und einer formsteifen Trägerschicht 8, die fest zu einem Verbund vereinigt sind. Die Biegelinien 5, 5' sind auf unterschiedliche Weise durch Einformung einer Nut od. dgl. in den Formhimmel herstellbar, wie nachfolgend anhand der Figuren 4 bis 10 erläutert wird. Die Biegelinien 5, 5' generieren bei allen Ausführungsbeispielen gemäß den Figuren 4 bis 10 Zonen örtlicher Flexibilität und ermöglichen daher gewissermaßen scharnierte Klappbewegungen der Teilbereiche gegenüber dem zentralen Bereich des Formhimmels.

Bei dem Ausführungsbeispiel nach Fig. 4 ist in die Unterseite der Trägerschicht 8 vor Anbringung der Oberflächenschicht 7 eine Nut 9 zur Bildung der Biegelinie 5, 5' eingeprägt worden, die beim danach erfolgenden Anbringen der Oberflächenschicht 7 abgedeckt wird, d.h. dadurch unsichtbar ist.

Das Ausführungsbeispiel entsprechend Fig. 5 veranschaulicht einen Formhimmel, bei dem die Oberflächenschicht 7 und die Trägerschicht 8 zum Verbund vereinigt werden, bevor von oben in die Trägerschicht 8 eine nutartige Mulde 10 zur Bildung der Biegelinie 5, 5' eingeformt wird. Die Mulde kann aber auch vor Vereinigung der Oberflächenschicht mit der Trägerschicht in die Trägerschicht eingeformt werden. Die Mulde 10 liegt im unsichtbaren Bereich des Formhimmels.

In Fig. 6 ist ein Formhimmel dargestellt, bei dem die Biegelinie 5, 5' durch eine sichtbar sowohl in die Oberflächenschicht 7 als auch in die Trägerschicht 8 gleichzeitig eingeformte Einprägung 11 gebildet ist.

Bei dem Ausführungsbeispiel gemäß Fig. 7 sind die Biegelinien 5, 5' als unsichtbare nutenförmige Einfräsungen 12 in die Oberseite der Trägerschicht 8 eingeformt.

In Fig. 8 ist zur Bildung der Biegelinien 5, 5' lediglich ein von oben in die Trägerschicht 8 eingebrachter Einschnitt 13 vorgesehen, der ebenfalls unsichtbar ist.

Bei den in den Figuren 9 und 10 dargestellten Ausführungsbeispielen sind die Biegelinien 5, 5' jeweils als sichtbare Stufenprägungen 14 bzw. 14' gleichzeitig in die Oberflächenschicht 7 und die Trägerschicht 8 eingeformt. Im Bereich der Biegelinien 5, 5' wird dabei die Trägerschicht 8 filmscharnierartig verdünnt.

Der aus Fig. 11 entnehmbare Formhimmel 1" entspricht in der Ausbildung seiner hier gezeigten Biegelinie 5 bzw. 5' etwa der in Fig. 9 dargestellten Stufenprägung 14. Der Formhimmel 1" ist an der Stelle des gezeigten Schnitts über die Anordnung 15 an dem Karosserierahmen 16 eines Fahrzeugs befestigt. Das Kraftfahrzeugdach 17 und das daran vorgesehene Falt-Schiebedach 18 sind in Fig. 11 nur angedeutet.

Wie am Beispiel der Fig. 4 erläutert werden soll, bildet die die Biegelinien 5, 5' erzeugende Nut 9 am Nutgrund einen ebenen, zu den benachbarten Flächen des Formhimmels etwa planparallelen Flächenstreifen 19 aus, dessen Breite in diesem Beispiel nur etwas geringer ist als die äußere Breite der Nut 9.

Vorgeschlagen wird ein Formhimmel als Teil der Innenraumausstattung eines Kraftfahrzeugs, bestehend aus einer dekorativen Oberflächenschicht und einer formsteifen Trägerschicht. In dem Formhimmel sind Biegelinien, die auf unterschiedliche Weise erzeugt werden können, angebracht, welche am sonst biegesteifen Formhimmel Zonen örtlicher Flexibilität generieren und auf diese Weise für die Montage des Formhimmels klappbare Teilbereiche des Formhimmels bilden. Der Formhimmel kann aufgrund dieser Maßnahmen durch vergleichsweise kleinere Karosserieöffnungen hindurch zu seiner Montage in den Innenraum des Kraftfahrzeugs verbracht werden.

### Bezugszeichenliste

- 1, 1', 1": Formhimmel
- 2, 2': zentraler Bereich
- 3, 3': seitliche Teilbereiche
- 4: vorderer Teilbereich
- 5, 5': Biegelinien
- 6: Biegelinien
- 7: Oberflächenschicht
- 8: Trägerschicht
- 9: Nut
- 10: Mulde
- 11: Einprägung
- 12: Einfräsung
- 13: Einschnitt
- 14, 14': Stufenprägungen
- 15: Anordnung
- 16: Karosserierahmen
- 17: Kraftfahrzeugdach
- 18: Falt-Schiebedach
- 19: Flächenstreifen

## Patentansprüche

1. Formhimmel als Teil der Innenraumausstattung eines Kraftfahrzeugs, bestehend aus einer dekorativen Oberflächenschicht (7) und einer formsteifen Trägerschicht (8), wobei sich die Oberflächenschicht (7) mit der Trägerschicht (8) über eine eingeformte Nut, die eine definierte Biegelinie (5, 5') vorgibt, nach außen zu einem angeformten Umbiegeteil fortsetzt, **dadurch gekennzeichnet, daß** durch Anbringen von Biegelinien (5, 5') am sonst biegesteifen Formhimmel (1, 1', 1") Zonen örtlicher Flexibilität generiert sind, die für die Montage des Formhimmels (1, 1' 1") an- oder einklappbare Teilbereiche (3, 4; 3') des Formhimmels (1, 1', 1") bilden.

2. Formhimmel nach Anspruch 1, **dadurch gekennzeichnet, daß** die Linienführung der Biegelinien (5, 5') so gewählt ist, daß seitliche Teilbereiche (3; 3') und/oder ein vorderer Teilbereich (4) und/oder ein hinterer Teilbereich an- oder einklappbar sind.

3. Formhimmel nach Anspruch 1 oder 2, **dadurch gekennzeichnet, daß** die Biegelinien (5, 5') als sichtbare Prägungen, Sicken, Mulden, Einfräsungen, Einschnitte u.dgl. vorgesehen sind.

4. Formhimmel nach Anspruch 1 oder 2, **dadurch gekennzeichnet, daß** die Biegelinien (5, 5') als unsichtbare Prägungen, Sicken, Mulden, Einfräsungen, Einschnitte u.dgl. vorgesehen sind.

5. Formhimmel nach Anspruch 4, **dadurch gekennzeichnet, daß** die Biegelinien (5, 5') als Nuten (9) nur in die Unterseite der Trägerschicht (8) eingeformt und durch die Oberflächenschicht (7) glatt abgedeckt sind.

6. Formhimmel nach Anspruch 4, **dadurch gekennzeichnet, daß** die Biegelinien (5, 5') als nutenförmige Mulden (10) nur in die Oberseite der Trägerschicht (8) eingeformt sind.

7. Formhimmel nach Anspruch 4, **dadurch gekennzeichnet, daß** die Biegelinien (5, 5') als Einschnitte (13) oder nutenförmige Einfräsungen (12) nur in die Oberseite der Trägerschicht (8) eingeformt sind.

8. Formhimmel nach Anspruch 3, **dadurch gekennzeichnet, daß** die Biegelinien (5, 5') als gleichzeitig in die Unterseiten der Oberflächenschicht (7) und der Trägerschicht (8) eingeformte nutenförmige Einprägungen (11) ausgebildet sind.

9. Formhimmel nach Anspruch 3, **dadurch gekennzeichnet, daß** die Biegelinien (5, 5') als Stufenprägungen (14, 14') gleichzeitig in die Oberflächenschicht (7) und die Trägerschicht (8) eingeformt sind.

10. Formhimmel nach einem der Ansprüche 1 bis 9, **dadurch gekennzeichnet, daß** die die Biegelinien (5, 5') erzeugenden Nuten am Nutgrund einen etwa ebenen Flächenstreifen (19) ausbilden, dessen Breite der äußeren Nutbreite entspricht oder nur wenig geringer als diese ist.
